# EUROPÄISCHE PATENTANMELDUNG

(11) **EP 4 390 443 A1**
(43) Veröffentlichungstag der Anmeldung: **26.06.2024**
(21) Anmeldenummer: 22214414.9
(22) Anmeldetag: 19.12.2022
(51) Int. Cl.: G01S 7/481, G01S 7/497, G01S 7/499

(54) **ÜBERWACHUNG DER KONTROLLSENSOREN EINES OPTISCHEN SENSORS**

(71) Anmelder: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(57) **Zusammenfassung**

Die Erfindung betrifft einen optischen Sensor (1) zur Erfassung von Objekten in einem Überwachungsbereich, mit einem Gehäuse (2) in welchem Sensorkomponenten integriert sind. Als Sensorkomponenten sind ein Sendelichtstrahlen (4) emittierender Sender (5) und ein Empfangslichtstrahlen (6) empfangender Empfänger (7) vorhanden, wobei das Gehäuse (2) ein Austrittsfenster (11) aufweist, durch welches die Sendelichtstrahlen (4) und die von Empfangslichtstrahlen (6) geführt sind. Die Sendelichtstrahlen (4) sind mittels Ablenkmitteln periodisch innerhalb des Überwachungsbereichs geführt. Zur Kontrolle von Beeinträchtigungen des Austrittsfensters (11) ist eine Anordnung von Kontrollsensoren (12) mit jeweils einem Kontrolllichtstrahlen (15) emittierenden Kontrollsender (13) und Kontrolllichtstrahlen (15) empfangenden Kontrollempfänger (14, 14') vorhanden. In einer zeitlichen Abfolge wird wenigstens ein Referenzelement (17) in den oder die Strahlengänge der Kontrolllichtstrahlen (15) zur Durchführung von Referenzmessungen eingebracht, anhand derer eine Überwachung der Kontrollsensoren (12) durchgeführt wird. Alternativ oder zusätzlich sind dem Kontrollsensor (12) sind zwei Reflexionselemente (31a, b) zugeordnet. Über ein erstes Reflexionselement (31a) sind das Austrittsfenster (11) durchsetzende Kontrolllichtstrahlen (15) zum Kontrollempfänger (14, 14') geführt und über ein zweites Reflexionselement (31b) sind am Austrittsfenster (11) reflektierte Kontrolllichtstrahlen (15) zum Kontrollempfänger (14, 14') geführt. Polarisierte Kontrolllichtstrahlen (15) werden im Kontrollempfänger (14, 14`) ausgewertet.

## Beschreibung

Die Erfindung betrifft einen optischen Sensor und ein Verfahren zur Erfassung von Objekten.

Derartige optische Sensoren sind als scannende Sensoren, insbesondere als Flächendistanzsensoren ausgebildet, mittels derer ein flächiger Überwachungsbereich überwacht wird.

Ein derartiger optischer Sensor weist generell ein Gehäuse zur Aufnahme dessen Sensorkomponenten auf. Als Sensorkomponenten sind ein Sendelichtstrahlen emittierender Sender und ein Empfangslichtstrahlen empfangender Empfänger vorgesehen, die insbesondere einen Distanzsensor ausbilden. Die Distanzmessungen können nach einem Impuls-Laufzeit-Verfahren und noch einem Phasenmessverfahren erfolgen.

Die Sendelichtstrahlen werden mittels Ablenkmitteln periodisch innerhalb des Überwachungsbereichs geführt. Die Ablenkmittel können insbesondere von einer eine Drehbewegung ausführenden Ablenkeinheit gebildet sein, an der die Sendelichtstrahlen und auch die Empfangslichtstrahlen abgelenkt werden.

Dabei werden die Sendelichtstrahlen durch ein Austrittsfenster in einer Gehäusewand in den Überwachungsbereich geführt. Die von einem zu detektierenden Objekt zurückreflektierten Empfangslichtstrahlen werden durch das Austrittsfenster zur Ablenkeinheit und von dort zum Empfänger geführt.

Derartige optische Sensoren können insbesondere als Sicherheitssensoren ausgebildet sein, die in sicherheitstechnischen Applikationen eingesetzt werden. Hierzu weist der Sicherheitssensor einen fehlersicheren Aufbau auf.

Zur Kontrolle von Verschmutzungen des Austrittsfensters kann der optische Sensor eine Anordnung von Kontrollsensoren aufweisen, die vorteilhaft in Umfangsrichtung des Gehäuses verteilt angeordnet sind. Mit den Kontrollsensoren kann damit an unterschiedlichen Stellen des Gehäuses kontrolliert werden, ob das Austrittsfensters verschmutzt ist oder nicht.

Melden die Kontrollsensoren Verschmutzungen des Austrittsfensters, kann eine Fehlermeldung generiert werden oder sogar der optische Sensor stillgesetzt werden.

Problematisch hierbei ist, dass derartige Fehlermeldungen nicht nur auf einem tatsächlich verschmutzten Austrittsfenster beruhen können, sondern auch auf Fehlfunktionen der Kontrollsensoren, wobei dann die Kontrollsensoren Verschmutzungen des Austrittsfensters melden können, obwohl keine Verschmutzungen vorhanden sind.

Der Erfindung liegt die Aufgabe zugrunde, die Funktionssicherheit eines optischen Sensors der eingangs genannten Art zu erhöhen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich, mit einem Gehäuse in welchem Sensorkomponenten integriert sind. Als Sensorkomponenten sind ein Sendelichtstrahlen emittierender Sender und ein Empfangslichtstrahlen empfangender Empfänger vorhanden, wobei das Gehäuse ein Austrittsfenster aufweist, durch welches die Sendelichtstrahlen und die von Empfangslichtstrahlen geführt sind. Die Sendelichtstrahlen sind mittels Ablenkmitteln periodisch innerhalb des Überwachungsbereichs geführt. Zur Kontrolle von Beeinträchtigungen des Austrittsfensters ist eine Anordnung von Kontrollsensoren mit jeweils einem Kontrolllichtstrahlen emittierenden Kontrollsender und Kontrolllichtstrahlen empfangenden Kontrollempfänger vorhanden. In einer zeitlichen Abfolge wird wenigstens ein Referenzelement in den oder die Strahlengänge der Kontrolllichtstrahlen zur Durchführung von Referenzmessungen eingebracht, anhand derer eine Überwachung der Kontrollsensoren durchgeführt wird. Alternativ oder zusätzlich sind dem Kontrollsensor zwei Reflexionselemente zugeordnet. Über ein erstes Reflexionselement sind das Austrittsfenster durchsetzende Kontrolllichtstrahlen zum Kontrollempfänger geführt und über ein zweites Reflexionselement sind am Austrittsfenster reflektierte Kontrolllichtstrahlen zum Kontrollempfänger geführt. Polarisierte Kontrolllichtstrahlen werden im Kontrollempfänger ausgewertet.

Die Erfindung betrifft ein entsprechendes Verfahren.

Mit dem erfindungsgemäßen optischen Sensor erfolgt eine Erfassung von Objekten in einem ausgedehnten, insbesondere flächigen Überwachungsbereich. Hierzu werden die Sendelichtstrahlen des Senders mittels Ablenkmitteln periodisch innerhalb des Überwachungsbereichs geführt. Entsprechend werden vorteilhaft von einem Objekt rückreflektierte Empfangslichtstrahlen über die Ablenkmittel abgelenkt.

Vorteilhaft bilden der Sensor und der Empfänger einen Distanzsensor, wobei hierzu die Empfangssignale des Empfängers in einer Auswerteeinheit ausgewertet werden. Die Distanzmessungen können insbesondere nach einem Impuls-Laufzeit-Verfahren oder nach einem Phasenmessverfahren erfolgen. Der optische Sensor bildet damit einen Flächendistanzsensor. Vorteilhaft sind zudem Mittel zur Erfassung der aktuellen Ablenkpositionen der Sendelichtstrahlen vorgesehen. Durch die Distanzmessungen und die Bestimmung der Ablenkpositionen der Sendelichtstrahlen können Positionen von Objekten im Überwachungsbereich bestimmt werden.

Die Sendelichtstrahlen und Empfangslichtstrahlen werden durch ein Austrittsfenster in einer Wand des Gehäuses geführt. Um Beeinträchtigungen des Austrittfensters wie Verschmutzungen oder mechanische Beschädigungen, wie Kratzer festzustellen, weist der optische Sensor eine Anordnung von Kontrollsensoren auf. Vorteilhaft sind mehrere Kontrollsensoren in Ablenkrichtung der Sendelichtstrahlen in Abstand zueinander angeordnet, um so mehrere Stellen des Austrittsfensters überwachen zu können.

Jeder Kontrollsensor weist dabei einen Kontrolllichtstrahlen emittierenden Kontrollsender und einen Kontrolllichtstrahlen empfangenden Kontrollempfänger auf. Die Kontrolllichtstrahlen werden durch das Austrittsfenster zum Kontrollempfänger geführt. Alternativ können mit dem Kontrollsensor auch Reflexionsmessungen am Austrittsfenster durchgeführt werden. In jedem Fall sind die Kontrolllichtstrahlen in Eingriff mit dem Austrittsfenster, wodurch Veränderungen des Austrittsfensters infolge von Beeinträchtigungen festgestellt werden können. Werden derartige Beeinträchtigungen festgestellt, kann der optische Sensor Fehlermeldungen ausgeben. Bei gravierenden Beeinträchtigungen, die eine sichere Objektdetektion einschränken oder sogar unmöglich machen, kann der optische Sensor auch in einen sicheren Zustand überführt werden, insbesondere stillgesetzt werden. Dies ist insbesondere dann vorteilhaft, wenn der optische Sensor ein Sicherheitssensor ist, der für den Einsatz in sicherheitstechnischen Applikationen einen fehlersicheren Aufbau aufweist.

Gemäß einer ersten Variante der Erfindung wird die Funktionssicherheit des optischen Sensors dadurch erhöht, dass die Kontrollsender selbst überwacht und auf eventuelle Fehler geprüft werden. Damit können Fehlfunktionen der Kontrollsensoren aufgedeckt und vorteilhaft behoben werden, so dass Fehlerdetektionen bei der Überwachung des Austrittsfensters vermieden werden können.

Zur Prüfung der Kontrollsensoren wird erfindungsgemäß in definierter zeitlicher Abfolge wenigstens ein Referenzelement in die Strahlengänge der Kontrolllichtstrahlen eingebracht, wodurch die Kontrolllichtstrahlen in definierter Weise beeinflusst werden, was anhand der Empfangssignale des zugeordneten Kontrollempfängers, auf welchen die vom Referenzelement kommenden Kontrolllichtstrahlen geführt sind, festgestellt werden kann. Anhand der so durchgeführten Referenzmessung kann somit eine Überwachung aller Kontrollsensoren erfolgen.

Vorteilhaft führt das Referenzelement relativ zu dem oder den Kontrollsensoren eine periodische Relativbewegung aus.

Damit wird in regelmäßigen Zeitintervallen das Referenzelement in den Strahlengang der Kontrollsensoren eingebracht, um so den entsprechenden Kontrollsender zyklisch zu testen.

Besonders vorteilhaft ist im Gehäuse des optischen Sensors als Ablenkmittel eine eine Drehbewegung ausführende Ablenkeinheit vorgesehen, an welcher die Sendelichtstrahlen und Empfangslichtstrahlen abgelenkt werden.

Insbesondere weist die Ablenkeinheit einen motorisch getriebenen, um eine Drehachse drehbaren Umlenkspiegel auf, an welchem die Sendelichtstrahlen und Empfangslichtstrahlen abgelenkt werden.

In diesem Fall ist das Referenzelement an der Ablenkeinheit befestigt.

Insbesondere ist das Referenzelement fest mit dem Umlenkspiegel verbunden.

Die Ablenkeinheit erfüllt damit eine Doppelfunktion derart, dass mit dieser nicht nur die Sendelichtstrahlen und Empfangslichtstrahlen abgelenkt werden. Vielmehr wird mit der Ablenkeinheit auch eine periodische Bewegung des Referenzelements generiert, wobei durch die Befestigung des Referenzelements an der Ablenkeinheit, insbesondere am Umlenkspiegel, eine Bewegungskopplung mit der Ablenkeinheit erzielt wird.

Gemäß einer ersten Variante bildet das Referenzelement ein Element mit reflektiven Eigenschaften, d.h. die Kontrolllichtstrahlen werden am Referenzelement reflektiert.

Das Referenzelement kann dann eine spiegelnde Oberfläche aufweisen, insbesondere ein Spiegel sein. Alternativ kann das Referenzelement ein Retroreflektorelement sein.

Das Referenzelement wird dann so in dem Strahlengang der Kontrolllichtstrahlen eines Kontrollsensors eingebracht, dass die Kontrolllichtstrahlen nicht zum Austrittsfenster geführt sind, sondern vom Referenzelement zum Kontrollempfänger des Kontrollsensors reflektiert werden. In diesem Fall wird eine Messstrecke zur Durchführung von Referenzmessungen erhalten, die völlig unabhängig vom Austrittsfenster ist.

Das Referenzelement weist eine definierte, langzeitstabile Reflektivität auf. Durch das Führen der Kontrolllichtstrahlen über das Referenzelement und Auswerten der Empfangssignale des Kontrollempfängers kann eine Funktionsüberprüfung des Kontrollsensors erfolgen. Zweckmäßig können die bei den Referenzmessungen erhaltenen Messwerte mit vorab eingelernten Werten verglichen werden.

Gemäß einer zweiten Variante weist das Referenzelement transmissive Eigenschaften auf.

In diesem Fall durchsetzt ein definierter Teil der Kontrolllichtstrahlen eines Kontrollsenders das Referenzelement und ist zum zugeordneten Kontrollempfänger geführt.

Dadurch, dass das Referenzelement definierte, bekannte Transmissionseigenschaften aufweist, kann anhand der bei den Referenzmessungen erhaltenen Empfangssignale am jeweiligen Kontrollempfänger eine Funktionsprüfung durchgeführt werden.

Gemäß einer dritten Variante weist das Referenzelement sowohl reflektive als auch transmissive Eigenschaften auf.

In diesem Fall sind einem Kontrollsender eines Kontrollsensors zwei Kontrollempfänger zugeordnet, wobei bei im Strahlengang der Kontrolllichtstrahlen eingebrachten Referenzelement ein definierter Teil der Kontrolllichtstrahlen das Referenzelement durchsetzt und zu einem ersten Kontrollempfänger geführt ist. Weiterhin wird ein am Referenzelement reflektierter Teil der Kontrolllichtstrahlen zu einem zweiten Kontrollempfänger geführt. Zur Funktionsüberprüfung werden dann die Empfangssignale der Kontrollempfänger bei der Durchführung der Referenzmessungen ausgewertet.

Die Ergebnisse der Referenzmessungen werden in einer Rechnereinheit ausgewertet, die als separate Einheit von einem Controller oder dergleichen gebildet sein kann. Alternativ kann die Rechnereinheit von der Auswerteeinheit des optischen Sensors gebildet sein.

Gemäß einer vorteilhaften Ausführungsform werden anhand von Referenzmessungen in einer Rechnereinheit Fehler der Kontrollsensoren erkannt.

Im einfachsten Fall wird bei Aufdecken eines Fehlers eines Kontrollsensors eine Fehlermeldung generiert.

Besonders vorteilhaft werden anhand von Referenzmessungen in einer Rechnereinheit Korrekturwerte für die Kontrollsensoren ermittelt.

Dies bedeutet, dass bei Auftreten von Fehlfunktionen wenigstens eines Kontrollsensors in der Rechnereinheit Korrekturwerte ermittelt werden, mit denen der Betrieb des Kontrollsensors korrigiert wird, so dass mit diesem wieder eine fehlerfreie Überwachung des Austrittsfensters gewährleistet ist.

Vorteilhaft werden anhand der Korrekturwerte Sendeleistungen des oder der Kontrollsender und/oder Empfindlichkeiten des oder der Kontrollempfänger korrigiert.

Gemäß einer alternativen Ausführungsform werden anhand von Referenzmessungen Messergebnisse des oder der Kontrollsensoren korrigiert.

In diesem Fall wird anhand der Ergebnisse der Referenzmessungen nicht die Funktion des Kontrollsensors geändert. Vielmehr werden die Messergebnisse, die der Kontrollsensor liefert, anhand von Korrekturwerten, die bei den Referenzmessungen ermittelt werden, geändert, so dass danach wieder eine fehlerfreie Kontrolle von Beeinträchtigungen des Austrittsfensters gewährleistet ist.

Gemäß einer zweiten Variante der Erfindung, die alternativ oder zusätzlich zur ersten Variante zum Einsatz kommen kann, sind dem Kontrollsensor zwei Reflexionselemente zugeordnet, wobei über ein erstes Reflexionselement das Austrittsfenster durchsetzende Kontrolllichtstrahlen zum Kontrollempfänger geführt sind und über ein zweites Reflexionselement am Austrittsfenster reflektierte Kontrolllichtstrahlen zum Kontrollempfänger geführt sind, und wobei polarisierte Kontrolllichtstrahlen im Kontrollempfänger ausgewertet werden.

Dadurch, dass dem Kontrollsensor zwei Reflexionselemente zugeordnet sind, werden Beeinträchtigungen, insbesondere Verschmutzungen des Austrittsfensters gleichzeitig mit einer Transmissions- und einer Reflexionsmessung detektiert, wodurch derartige Beeinträchtigungen besonders sicher detektiert werden. Diese Nachweisempfindlichkeit wird dadurch noch weiter erhöht, dass im Kontrollempfänger polarisierte Kontrolllichtstrahlen ausgewertet werden, d.h. es wird nur Licht in einer Polarisationsrichtung ausgewertet. Insbesondere können Transmissions- und Reflexionseigenschaften des Austrittsfensters unterscheidbar analysiert werden, wobei vorteilhaft das Licht zur Analyse der Transmission senkrecht polarisiert ist zum Licht zur Analyse der Reflexion.

Vorteilhaft emittiert der Kontrollsender linear polarisierte Kontrolllichtstrahlen. Weiterhin können dem Kontrollempfänger linearpolarisierende Polarisationsmittel vorgeordnet sein.

Besonders vorteilhaft emittiert der Kontrollsender linear polarisiertes Licht, wobei dem Kontrollempfänger ein Polarisationsmittel zugeordnet ist, welches nur linear polarisiertes Licht in eine Polarisationsrichtung durchlässt, die senkrecht zur Polarisationsrichtung der vom Kontrollsender emittierten Kontrolllichtstrahlen ist.

Der Kontrollsender kann bereits selbst linear polarisiertes Licht emittieren. Alternativ ist dem Kontrollsender ein Polarisationsfilter nachgeordnet.

Bei nicht beeinträchtigtem Austrittsfenster gelangt dann kein Licht zum Kontrollempfänger. Liegt eine Beeinträchtigung des Austrittsfensters vor, werden dort die Kontrolllichtstrahlen diffus aufgestreut und teilweise dipolarisiert, so dass dieser Anteil der Kontrolllichtstrahlen im Kontrollempfänger detektiert wird. Dadurch können auch geringfügige Beeinträchtigungen des Austrittsfensters sicher detektiert werden.

Gemäß einer besonders vorteilhaften Ausführungsform ist jeder Kontrollsensor ein koaxialer Reflexionstaster.

Bei diesem Reflexionstaster werden die von dem Kontrollsensor emittierten Kontrolllichtstrahlen koaxial zu den von dem Reflexionselement rückreflektierten Kontrolllichtstrahlen geführt.

Vorteilhaft sind dabei die Reflexionselemente jeweils in Form eines Spiegels mit einem vorgeordneten Polarisationselement oder als Retroreflektor ausgebildet.

Gemäß einer ersten Ausgestaltung weist der einen Kontrollsensor bildende Reflexionstaster nur einen Kontrollempfänger auf, welcher einem Strahlteilerspiegel zugeordnet ist.

Vorteilhaft emittiert der Kontrollsender linear polarisierte Kontrolllichtstrahlen. Dem Kontrollempfänger ist ein Polarisationsmittel, insbesondere Polarisationsfilter vorgeordnet, dessen Polarisationsrichtung senkrecht zur Polarisationsrichtung der Kontrolllichtstrahlen ist.

Gemäß einer zweiten Ausgestaltung weist der einen Kontrollsensor bildende Reflexionstaster einen Kontrollsender und zwei Kontrollempfänger auf. Dabei sind zwei Strahlteilerspiegel vorhanden, mittels derer ein koaxialer Strahlengang der Kontrolllichtstrahlen erzeugt wird.

Mit den beiden Kontrollempfängern können unabhängig voneinander Beeinträchtigungen des Austrittsfensters erfasst werden.

Zweckmäßig sind dem Kontrollempfänger Polarisationsmittel zugeordnet, deren Polarisationsrichtungen senkrecht zueinander orientiert sind, wobei der Kontrollsender unpolarisierte Kontrolllichtstrahlen emittiert.

Bei einer Variante der zweiten Ausgestaltung weist jeder Kontrollsensor eine triaxiale Anordnung mit einem Kontrollsender und zwei Kontrollempfängern auf.

In diesem Fall kann jeder Kontrollempfänger eine ringförmige Anordnung von Empfangselementen aufweisen.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Zweites Ausführungsbeispiel des erfindungsgemäßen optischen Sensors.
- Figur 3:: Darstellung einer Anordnung des optischen Sensors gemäß Figur 1 zur Durchführung von Referenzmessungen.
- Figur 4:: Darstellung einer Anordnung des optischen Sensors gemäß Figur 2 zur Durchführung von Referenzmessungen.
- Figur 5:: Variante der Ausführungsform gemäß Figur 3.
- Figur 6:: Ablaufdiagramm für eine erste Fehlerkorrektur von Fensterüberwachungen.
- Figur 7:: Ablaufdiagramm für eine zweite Fehlerkorrektur von Fensterüberwachungen.
- Figur 8:: Weiteres Ausführungsbeispiel des erfindungsgemäßen optischen Sensors mit einem Kontrollsensor
a) mit einem Referenzelement außerhalb des Strahlengangs der Kontrolllichtstrahlen des Kontrollsensors
b) mit dem Referenzelement innerhalb des Strahlengangs der Kontrolllichtstrahlen des Kontrollsensors.
- Figur 9:: Erste Ausführungsform des Kontrollsensors gemäß Figur 8.
- Figur 10:: Zweite Ausführungsform des Kontrollsensors gemäß Figur 8.
- Figur 11:: Variante der Ausführungsform gemäß Figur 8.
- Figur 12:: Spezifische Ausbildung eines Referenzelements für den optischen Sensor gemäß Figur 8.
- Figur 13:: Weiteres Ausführungsbeispiel eines Kontrollsensors für den erfindungsgemäßen optischen Sensor.
- Figur 14a:: Ringförmige Anordnung von Polarisationsfiltern für den Kontrollsensor gemäß Figur 13.
- Figur 14b:: Ringförmige Anordnung von Reflexionselementen für den Kontrollsensor gemäß Figur 13.
- Figur 15:: Ausführung eines Lambda/4-Plättchens für das Referenzelement mit zwei Orientierungen.

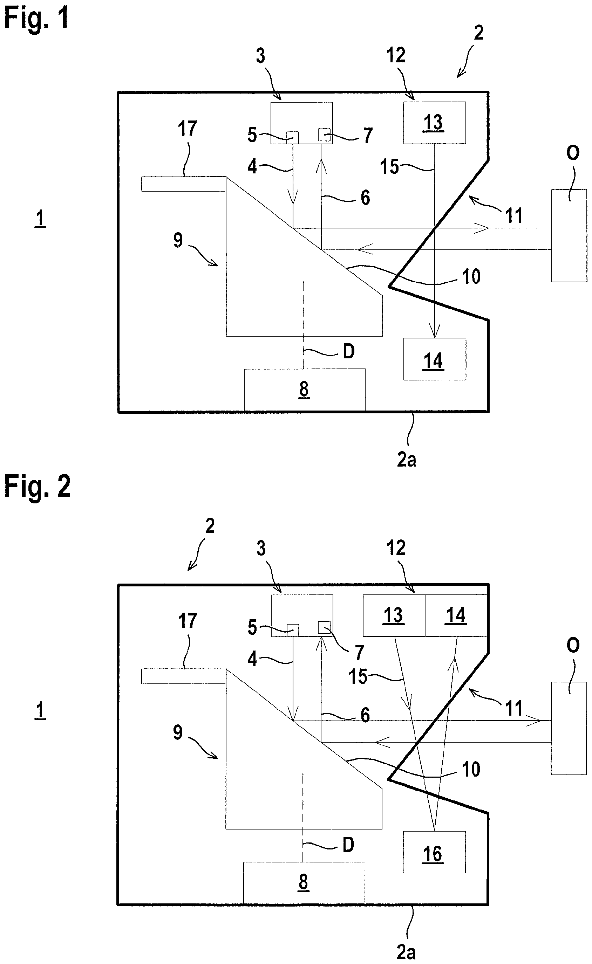

Figur 1 zeigt ein Ausführungsbeispiel des erfindungsgemäßen optischen Sensors 1.

Der optische Sensor 1 dient zur Objektüberwachung in einem Überwachungsbereich. Die Sensorkomponenten des optischen Sensors 1 sind in einem Gehäuse 2 untergebracht.

Als Sensorkomponente ist im Gehäuse 2 ein Distanzsensor 3 ortsfest gelagert, wobei im vorliegenden Fall der Distanzsensor 3 im oberen, einem Boden 2a des Gehäuses 2 gegenüberliegenden Bereich gelagert ist. Der Distanzsensor 3 umfasst einen Sendelichtstrahlen 4 emittierenden Sender 5 und einen Empfangslichtstrahlen 6 empfangenden Empfänger 7. Der Einfachheit halber sind der Sender 5 und Empfänger 7 nebeneinander liegend dargestellt. Generell ist auch eine koaxiale Sender-Empfänger-Anordnung möglich, beispielsweise derart, dass der Sender 5 in einer zentralen Aussparung einer Empfangsoptik liegt. Der Empfänger 7 liegt dann in Strahlrichtung der Empfangslichtstrahlen 6 hinter der Empfangsoptik, so dass diese die Empfangslichtstrahlen 6 auf den Empfänger 7 fokussiert.

Weiterhin ist eine nicht dargestellte Auswerteeinheit zur Auswertung von Empfangssignalen des Empfängers 7 vorhanden. Ist der optische Sensor 1 als Sicherheitssensor ausgebildet, weist die Auswerteeinheit zur Gewährleistung eines fehlersicheren Aufbaus eine redundante Auswerteeinheit auf, beispielsweise in Form zweier sich zyklisch gegenseitig überwachenden Rechnereinheiten.

Mit dem Distanzsensor 3 werden Distanzmessungen nach einem Impuls-Laufzeit-Verfahren durchgeführt. Hierzu emittiert der Sender 5 Sendelichtstrahlen 4 in Form von Lichtimpulsen.

Dann wird als Maß für die Distanz eines Objektes zum optischen Sensor 1 die Laufzeit der Lichtimpulse zu dem Objekt und zurück zum optischen Sensor 1 erfasst und in der Auswerteeinheit ausgewertet. Alternativ kann die Distanzmessung nach dem Phasenmessprinzip erfolgen.

Auf dem Boden 2a des Gehäuses 2 ist eine Antriebseinheit 8 für eine ein Ablenkmittel bildende Ablenkeinheit 9 mit einem Umlenkspiegel 10 vorgesehen. Durch die Antriebseinheit 8 wird die Ablenkeinheit 9 in eine Drehbewegung um eine Drehachse D versetzt. Die Ebene des Umlenkspiegels 10 ist um 45° bezüglich der Drehachse D geneigt.

Ein Teil der Mantelfläche des Gehäuses 2 bildet ein Austrittsfenster 11 aus, welches transparent ist, so dass die Sendelichtstrahlen 4 durch das Austrittsfenster 11 in den Überwachungsbereich geführt sind, ebenso wie die von einem Objekt zurückreflektierten Empfangslichtstrahlen 6.

Das Austrittsfenster 11 besteht aus zwei gegenüber der Längsachse des Gehäuses 2 geneigten Teilsegmenten. Das Austrittsfenster 11 erstreckt sich über einen definierten Winkelbereich in Umfangsrichtung des Gehäuses 2, beispielsweise über einen Winkelbereich von 180°.

Die Sendelichtstrahlen 4 (wie auch die Empfangslichtstrahlen 6) werden am Umlenkspiegel 10 abgelenkt. Durch die Drehbewegung der Ablenkeinheit 9 werden die Sendelichtstrahlen 4 periodisch innerhalb des Überwachungsbereichs geführt, dessen Größe durch die Winkelausdehnung des Austrittsfensters 11 bestimmt ist. Die aktuelle Ablenkposition der Sendelichtstrahlen 4 wird über einen Winkelgeber an der Ablenkeinheit 9 bestimmt.

Aus den ermittelten Distanzwerten und den Ablenkpositionen der Sendelichtstrahlen 4 kann die Position eines Objekts im Überwachungsbereich bestimmt werden.

Zur Kontrolle von Verschmutzungen oder sonstigen Beeinträchtigungen des Austrittsfensters 11 ist eine Anordnung von Kontrollsensoren 12 vorgesehen, die identisch ausgebildet sind und in Umfangsrichtung des Gehäuses 2 verteilt angeordnet sind, so dass mit diesen Kontrollsensoren 12 verschiedene Bereiche des Austrittsfensters 11 erfasst werden.

Bei der Ausführungsform gemäß Figur 1 umfasst jeder Kontrollsensor 12 (von welchem nur einer dargestellt ist) einen Kontrollsender 13 im oberen Bereich des Gehäuses 2 und einen Kontrollempfänger 14, 14' im Bodenbereich des Gehäuses 2. Der Kontrollsender 13 und der Kontrollempfänger 14, 14' sind so angeordnet, dass vom Kontrollsender 13 emittierte Kontrolllichtstrahlen 15 das Austrittsfenster 11 zweimal durchsetzen und dann auf den Kontrollempfänger 14, 14' treffen. Durch Auswertung der Empfangssignale des Kontrollempfängers 14, 14' in der Auswerteeinheit wird festgestellt, ob eine Verschmutzung bzw. Beeinträchtigung des Austrittsfensters 11 vorliegt, oder nicht.

Figur 2 zeigt eine Variante der Ausführungsform gemäß Figur 1. Die Ausführungsform gemäß Figur 2 unterscheidet sich nur hinsichtlich der Ausbildung der Kontrollsensoren 12. Jeder Kontrollsensor 12 der Ausführungsform gemäß Figur 2 weist einen Kontrolllichtstrahlen 15 emittierenden Kontrollsender 13 und einen Kontrollempfänger 14, 14' im oberen Bereich des Gehäuses 2 auf. Weiterhin umfasst der Kontrollsensor 12 im Bodenbereich des Gehäuses 2 einen Reflektor 16. Die vom Kontrollsender 13 emittierten Kontrolllichtstrahlen 15 durchsetzen das Austrittsfenster 11 zweimal, werden dann zum Reflektor 16 geführt und von dort in Richtung des Kontrollempfängers 14, 14' reflektiert, wobei die Kontrolllichtstrahlen 15 dabei nochmal zweimal das Austrittsfenster 11 durchsetzen. Die Erfassung von Verschmutzungen oder Beeinträchtigungen des Austrittsfensters 11 erfolgt analog zur Ausführungsform gemäß Figur 1.

Erfindungsgemäß erfolgt eine Kontrolle der Funktion der Kontrollsensoren 12. Hierzu ist ein Referenzelement 17 vorgesehen. Bei den Ausführungsformen der Figuren 1 und 2 ist das Referenzelement 17 an der dem Umlenkspiegel 10 abgewandten Seite der Ablenkeinheit 9 befestigt. Das flächige Referenzelement 17 steht senkrecht von der Wand der Ablenkeinheit 9 hervor. Die Größe des Referenzelements 17 ist so dimensioniert, dass mit diesem die Kontrolllichtstrahlen 15 jeweils nur eines Kontrollsenders 13 beeinflusst werden.

Durch die Drehbewegung wird das Referenzelement 17 periodisch nacheinander in den Strahlengang der einzelnen Kontrollsensoren 12 gebracht.

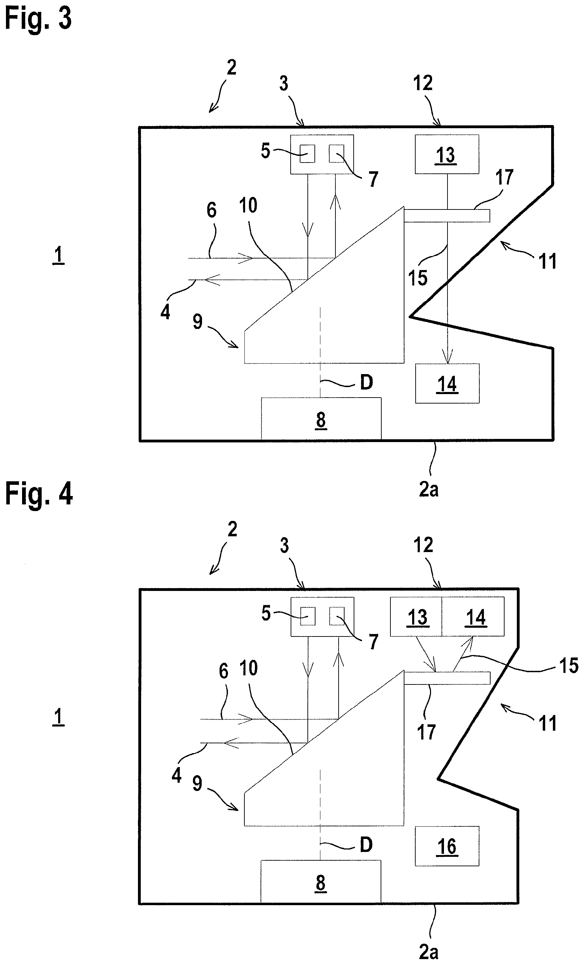

Figur 3 zeigt eine solche Situation für den optischen Sensor 1 gemäß Figur 1.

Bei dieser Ausführungsform weist das Referenzelement 17 definierte transmissive Eigenschaften auf. Durch das in den Strahlengang der Kontrolllichtstrahlen 15 gebrachte Referenzelement 17 werden die Kontrolllichtstrahlen 15 in definierter Weise geschwächt.

Durch Auswerten der Empfangssignale am Kontrollempfänger 14, 14' bei dieser Referenzmessung wird in einer Rechnereinheit die vorzugsweise von der Auswerteeinheit gebildet ist, erfasst, ob der Kontrollsensor 12 fehlerfrei arbeitet oder nicht. Vorteilhaft werden hierzu die Empfangssignale des Kontrollempfängers 14, 14' mit zuvor ermittelten Referenzwerten verglichen.

Figur 4 zeigt eine Anordnung des Referenzelements 17 zur Durchführung von Referenzmessungen für den optischen Sensor 1 gemäß Figur 2. Bei dieser Ausführungsform weist das Referenzelement 17 rein reflektive Eigenschaften auf. Das Referenzelement 17 kann dann ein Spiegel oder ein Retroreflektorelement sein. In diesem Fall werden die Kontrolllichtstrahlen 15 des Kontrollsenders 13 direkt vom Referenzelement 17 zum Kontrollempfänger 14, 14' reflektiert. Die Funktionsprüfung des Kontrollsensors 12 erfolgt analog zur Ausführungsform gemäß Figur 3.

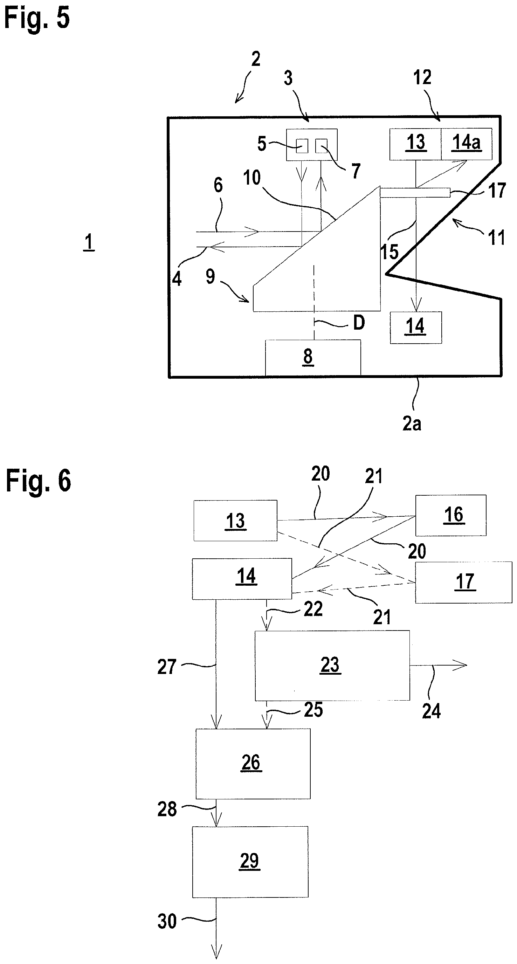

Figur 5 zeigt eine Erweiterung der Anordnung gemäß Figur 3 dahingehend, dass der Kontrollsensor 12 neben dem Kontrollsender 13 im oberen Bereich des Gehäuses 2 und dem Kontrollempfänger 14, 14' im Bodenbereich des Gehäuses 2 einen Zusatz-Kontrollempfänger 14a im oberen Bereich des Gehäuses 2 aufweist.

In diesem Fall weist das Referenzelement 17 sowohl transmissive als reflektive Eigenschaften auf. Demzufolge durchsetzt ein definierter Teil der Kontrolllichtstrahlen 15 das Referenzelement 17 und trifft auf den Kontrollempfänger 14, 14'. Weiterhin wird ein definierter Teil des Kontrolllichtstrahls 15 am Referenzelement 17 reflektiert und trifft auf den Zusatz-Kontrollempfänger 14a. Aus dem Verhältnis der Empfangssignale am Kontrollempfänger 14, 14' und am Zusatz-Kontrollempfänger 14a wird in der Rechnereinheit beurteilt, ob die Funktion des Kontrollsensors 12 fehlerfrei ist oder nicht.

Figur 6 zeigt ein erstes Ablaufdiagramm für eine Fehlerkorrektur für eine mit Kontrollsensoren 12 durchgeführte Überwachung des Austrittsfensters 11 für den optischen Sensor 1 gemäß Figur 2.

Figur 6 zeigt die Komponenten eines Kontrollsensors 12 mit dessen Kontrollsender 13, Kontrollempfänger 14, 14' und Reflektor 16. Zudem ist das Referenzelement 17 dargestellt.

Dabei sind in Figur 6 der Strahlengang 20 der Kontrolllichtstrahl 15 bei der Durchführung der Verschmutzungskontrolle 29 des Austrittsfensters 11 und der Strahlengang 21 der Kontrolllichtstrahlen 15 bei der Durchführung der Referenzmessung gegen das Referenzelement 17 dargestellt.

Die bei den Referenzmessungen ermittelten Empfangssignale werden über einen Signalpfad 22 einem Fehlererkennungsmodul 23 zugeführt, wo eine Fehlererkennung der Kontrollsensoren 12 anhand dieser Empfangssignale durchgeführt wird. Abhängig von der Fehlererkennung werden Ausgangsgrößen 24 generiert, die angeben ob die Kontrollsensoren 12 fehlerfrei arbeiten oder nicht.

Ausgangsgrößen 24 des Fehlererkennungsmoduls 23 werden über einen Signalpfad 25 einem Korrekturmodul 26 zugeführt. Ebenso werden die bei Referenzmessungen erhaltenen Empfangssignale der Kontrollempfänger 14, 14' der Kontrollsensoren 12 über einen Signalpfad 27 dem Korrekturmodul 26 zugeführt.

Im Korrekturmodul 26 werden die bei den Referenzmessungen erhaltenen Messwerte korrigiert. Mit diesen Messwertkorrekturen (Signalpfad 28) erfolgt dann die Verschmutzungskontrolle 29 des Austrittsfensters 11 mit dem Kontrollsensor 12. Abhängig von dieser Verschmutzungskontrolle 29 wird ein Entscheidungssignal 30 generiert, das angibt, ob Beeinträchtigungen des Austrittsfensters 11 vorhanden sind oder nicht.

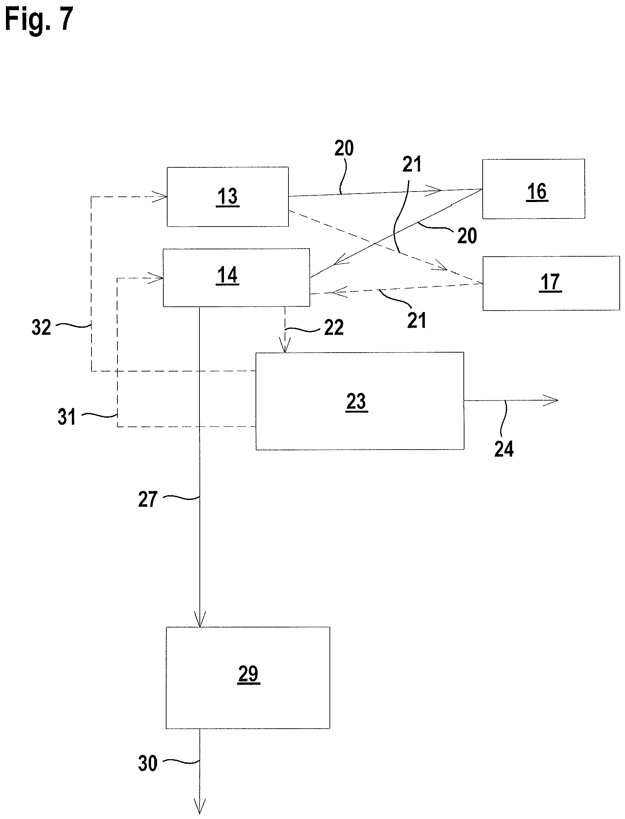

Figur 7 zeigt ein zweites Ablaufdiagramm für eine Fehlerkorrektur der Kontrollsensoren 12.

Das Ablaufschema gemäß Figur 7 unterscheidet sich vom Ablaufschema gemäß Figur 6 dadurch, dass im Fehlererkennungsmodul 23 eine Korrekturwertberechnung abhängig von festgestelltem Fehlfunktionen der Kontrollsensoren 12 durchgeführt wird. Abhängig von den ermittelten Korrekturwerten erfolgt eine Sendeleistungseinstellung der Kontrollsender 13 und/oder eine Empfindlichkeitseinstellung des Kontrollempfängers 14, 14', wodurch Fehlfunktionen der Kontrollsensoren 12 korrigiert werden.

Mit den so vorgenommenen Einstellungen werden Fehler der Kontrollsender 13 korrigiert. Mit den fehlerkorrigierten Kontrollsensoren 12 erfolgt dann die Verschmutzungskontrolle 29.

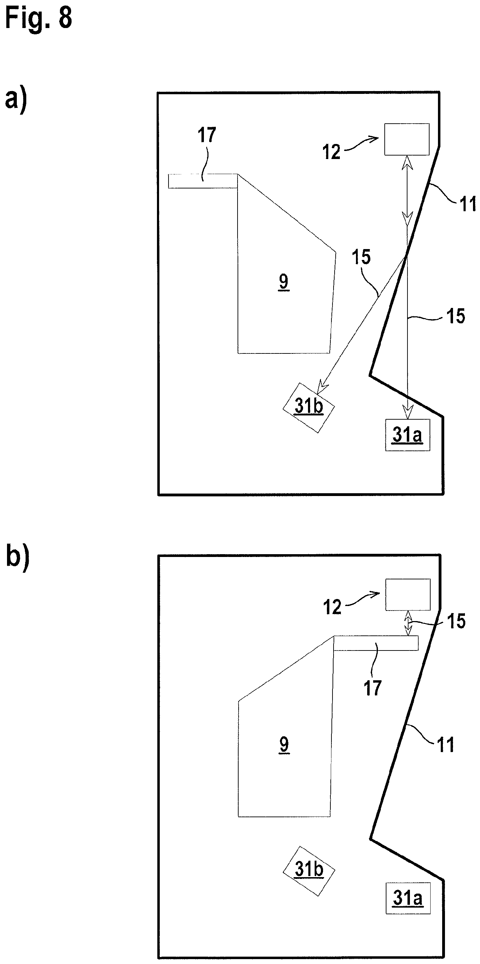

Die Figuren 8a und 8b zeigen eine weitere Ausführungsform des optischen Sensors 1 mit einem Kontrollsensor 12. Entsprechend der vorherigen Ausführungsformen ist an der Ablenkeinheit 9 das Referenzelement 17 befestigt und rotiert mit dieser mit.

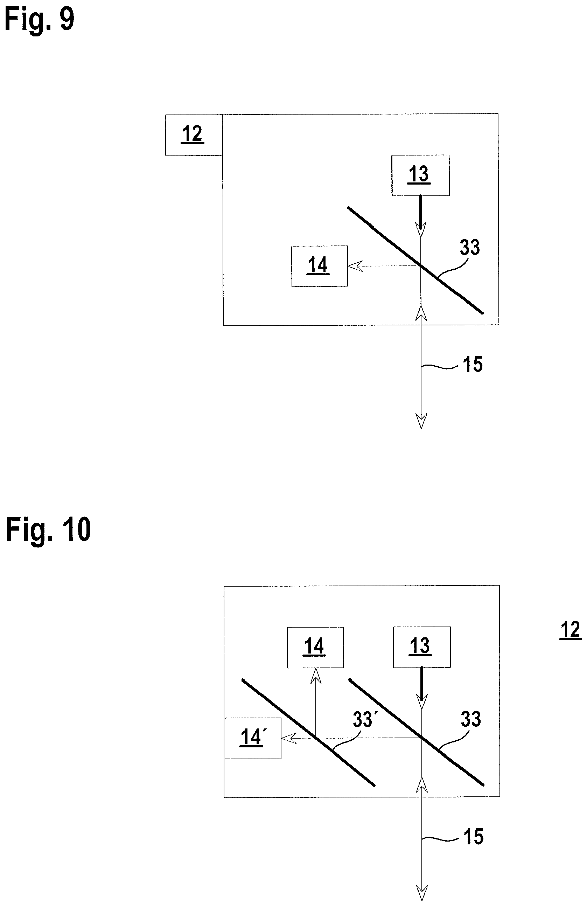

Der Kontrollsensor 12 ist im vorliegenden Fall als Reflexionstaster ausgebildet, bei dem vom Kontrollsensor 12 emittierte Kontrolllichtstrahlen 15 und zu diesem zurückreflektierte Kontrolllichtstrahlen 15 koaxial verlaufen. Beispiele des Kontrollsensors 12 sind in den Figuren 9 und 10 dargestellt.

Dem Kontrollsensor 12 sind zwei Reflexionselemente 31a, b zugeordnet. Mit dem ersten Reflexionselement 31a wird eine Transmissionsmessung zur Erfassung von Beeinträchtigungen des Austrittsfensters 11 durchgeführt, in der vom Kontrollsensor 12 emittierte Kontrolllichtstrahlen 15 zum Teil das Austrittsfenster 11 durchsetzen, am Reflexionselement 31a reflektiert werden und dann wieder durch das Austrittsfenster 11 zurück zum Kontrollsensor 12 geführt sind (Figur 8a).

Mit dem zweiten Reflexionselement 31b wird eine Reflexionsmessung zur Erfassung von Beeinträchtigungen des Austrittsfensters 11 durchgeführt, indem vom Kontrollsensor 12 emittierte Kontrolllichtstrahlen 15 zum Teil am Austrittsfenster 11 reflektiert werden, dann auf das zweite Reflexionselement 31b geführt und von dort zurückreflektiert und über Reflexion am Austrittsfenster 11 zurück zum Kontrollsensor 12 geführt sind. Die Reflexionselemente 31a, b sind im vorliegenden Fall von Retroreflektoren gebildet (Figur 8a).

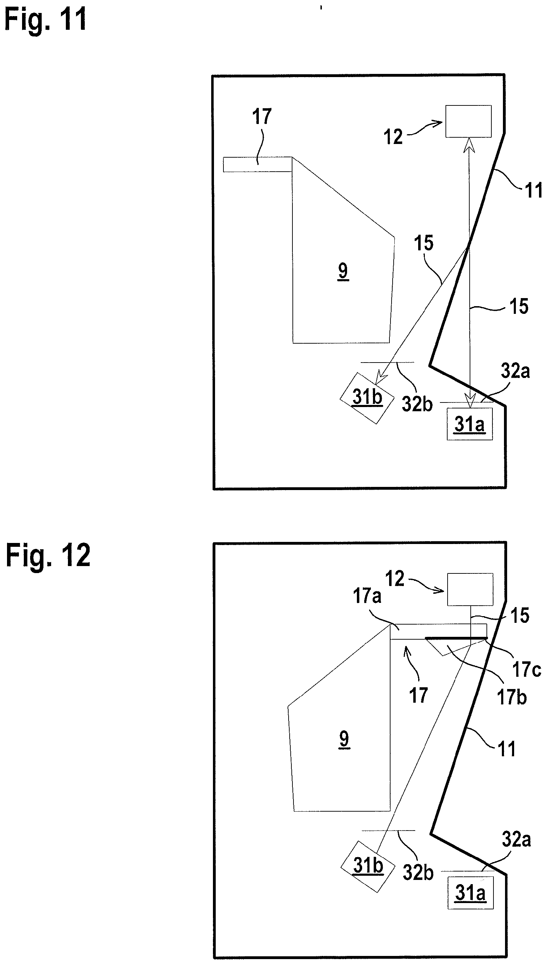

Figur 11 zeigt eine Variante der Ausführungsform gemäß Figur 8. Dort sind die Reflexionselemente 31a, b in Form von Spiegeln mit vorgeordneten Polarisationsfolien 32a, b ausgebildet, die auftreffende Kontrolllichtstrahlen 15 linear polarisieren.

Figur 9 zeigt eine erste Ausführungsform des als Reflexionstaster ausgebildeten Kontrollsensors 12. Dem Kontrollsender 13 und dem Kontrollempfänger 14 sind ein Strahlteilerspiegel 33 zugeordnet, wodurch ein koaxialer Strahlengang gesendeter und empfangender Kontrolllichtstrahlen 15 erhalten wird. Der Kontrollsender 13 emittiert linear polarisierte Kontrolllichtstrahlen 15. Entweder ist der Kontrollsender 13 selbst so ausgebildet, dass er linear polarisierte Kontrolllichtstrahlen 15 emittiert oder diesen ist ein entsprechendes Polarisationsmittel zugeordnet. Dem Kontrollempfänger 14 ist ein Polarisationsmittel zugeordnet, das auftreffende Kontrolllichtstrahlen 15 linear polarisiert. Die Polarisationsrichtung der vom Kontrollsender 13 emittierten Kontrolllichtstrahlen 15 und den Polarisationsmitteln des Kontrollempfängers 14 sind senkrecht zueinander orientiert.

Bei der Ausführungsform gemäß Figur 8 sind die Reflexionselemente 31a, b aus rein dielektrisch in Totalreflexion arbeitenden Tripelreflektoren aufgebaut, so dass der Polarisationszustand des linear polarisierten Lichts durch die mehrfache Totalreflexion so verändert wird, dass auch eine senkrecht zur ursprünglichen Polarisationsrichtung orientierte polarisierte Polarisationskomponente entsteht. Diese Komponente kann im koaxialen Reflexionstaster detektiert werden.

Bei der Ausführungsform gemäß Figur 11 sind die Reflexionselemente 31a, b aus Spiegeln aufgebaut, auf denen linear polarisierende Polarisationsmittel aufgebracht sind, deren Orientierung um 45 Grad gegen die Polarisationsrichtung des Sendelichts verdreht ist. Dadurch entsteht eine zusätzliche Polarisationskomponente des gespiegelten Lichts, die parallel zur Polarisationsebene des Kontrollempfängers 14 orientiert ist. Dadurch kann die Intensität des den beiden Reflexionselementen 31a, b gespiegelten Lichts nach nochmaliger Reflexion am Austrittsfenster 11 und nochmaliger Transmission durch das Austrittsfenster 11 vom koaxialen Reflexionstaster detektiert werden.

Bei beiden Ausführungsformen können Beeinträchtigungen des Austrittsfensters 11 dadurch sicher erfasst werden, dass die auftreffenden Kontrolllichtstrahlen 15 an den Beeinträchtigungen diffus aufgestreut und teilweise depolarisiert werden, wodurch Licht auf den Kontrollempfänger 14 trifft. Die Beeinträchtigungen werden mit der Transmissions- und Reflexionsmessung unabhängig erfasst.

Figur 10 zeigt eine weitere Ausführungsform eines als Reflexionstaster ausgebildeten Kontrollsensors 12. Dieser Kontrollsensor 12 weist einen Kontrolllichtstrahlen 15 emittierenden Kontrollsender 13 und zwei Kontrollempfänger 14, 14' auf. Dem Kontrollsender 13 und der Empfängeranordnung ist ein erster Strahlteilerspiegel 33 zugeordnet. Den Kontrollempfängern 14, 14' ist ein zweiter Strahlteilerspiegel 33' zugeordnet. Dadurch wird wieder ein koaxialer Strahlengang der vom Kontrollsensor 12 emittierten Kontrolllichtstrahlen 15 und der zum Kontrollsensor 12 zurückreflektierten Kontrolllichtstrahlen 15 erhalten. In diesem Fall emittiert der Kontrollsender 13 unpolarisierte Kontrolllichtstrahlen 15. Den Kontrollempfängern 14, 14' sind linear polarisierende Polarisationsmittel zugeordnet, deren Polarisationsrichtung senkrecht zueinander orientiert sind. Mit den Kontrollempfängern 14, 14' werden Beeinträchtigungen des Austrittsfensters 11 wieder in einer Transmissions- und Reflexionsmessung erfasst.

Figur 12 zeigt eine spezifische Ausführungsform eines Referenzelements 17 für die Anordnung der Figur 11 i.V.m. Figur 10.

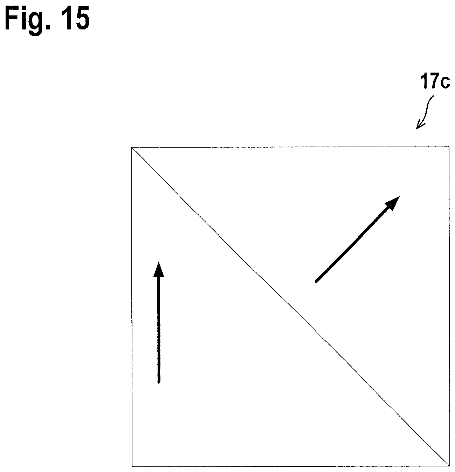

Das Referenzelement 17 ist hier durch eine Licht transmittierende prismatische optische Anordnung mit einem transmittierenden Element 17a und einem Prisma 17b ausgeführt. Die von dem Kontrollsensor 12 ausgehenden Kontrolllichtstrahlen 15 werden weder am Austrittsfenster 11 reflektiert noch durch das Austrittsfenster 11 transmittiert, sondern direkt auf das Reflexionselement 31 b geführt. Nachdem die Polarisationsrichtung der Polarisationsfolie 32b senkrecht auf die Polarisationsrichtung eines der Kontrollempfänger 14, 14'ausgerichtet ist, wird die Intensität des Referenzsignals für diese Polarisationsrichtung durch die Zuordnung zweier um 45 Grad zueinander verdrehten Lambda/4-Plättchen 17c für das transmittierende Element 17a angehoben (Figur 15).

Die Funktionsweise dieses Referenzelements 17 mit zwei Lambda/4-Plättchen 17c ist wie folgt:
Ein λ/4-Plättchen hat genauso wie eine Linear-Polfolie eine durch das Bauteil definierte Richtung, die dessen Wirkung definiert: Die Komponente des elektromagnetischen Felds entlang dieser Richtung wird in ihrer Schwingung um eine Viertelwelle verzögert, die Senkrechte dazu nicht. Daraus folgt, die maximale Wirkung der Polarisationsdrehung, wird nur dann erreicht, wenn die Verzögerungsrichtung des λ/4-Plättchen gegenüber der Linear-Polarisationsrichtung um 45° verdreht ist. Aus Sicht des λ/4-Plättchens besteht der Feldvektor des einfallenden Lichts dann aus zwei gleich großen, senkrecht zueinanderstehenden Komponenten, von denen einer um λ/4-verzögert wird, der andere nicht, so dass in der Summe das Licht danach zirkular polarisiert ist. Ist der Winkel ungleich 45 Grad entsteht elliptisch polarisiertes Licht, für 0 Grad und 90 Grad erhält das linear polarisierte Licht seine Polarisationsrichtung. Trifft unpolarisiertes Licht auf ein λ/4-Plättchen ändert sich der Polarisationszustand des Lichts nicht.

Mit der Umdrehung der Ablenkeinheit 9, die sich um 360 Grad dreht überstreicht der Winkel zwischen Referenzelement und Linear-Polfolie diesen Winkelbereich. Da das aus zwei unterschiedlich orientierten λ/4-Plättchen aufgebaute kombinierte λ/4-Plättchen im Referenzelement in zwei Zonen aufgeteilt ist, in denen die beiden λ/4-Plättchen in ihrer Orientierung jeweils um 45Grad verdreht sind, ist sichergestellt, dass in jeder Orientierung des Referenzelements ein Teil des Lichts elliptisch polarisiert ist und von den linear polarisierten Kontrollempfängern 14, 14' detektiert werden kann.

Trifft linear polarisiertes Licht, das parallel zur Polarisation der Polarisationsfolie 32b orientiert ist, auf das kombinierte Lambda/4-Plättchen 17c, entsteht elliptisch polarisiertes Licht. Trifft dieses elliptisch polarisierte Licht auf das mit der Polarisationsfolie 32b versehene Reflexionselement 31b, so wird dort nur ein Bruchteil der Intensität als linear polarisiertes Licht reflektiert. Auf dem Rückweg durchquert dieses Licht ein zweites Mal das kombinierte Lambda/4-Plättchen 17c. Wieder wird aus linear polarisiertem Licht elliptisch polarisiertes Licht, dessen Intensität durch die Projektion des elliptisch polarisierten Lichts auf die Linearpolarisatoren (Polarisationsmittel) der beiden Kontrollempfänger 14, 14' nachgewiesen werden kann.

Trifft linear polarisiertes Licht, das senkrecht zur Polarisation der Polarisationsfolie 32b orientiert ist, auf das kombinierte Lambda/4-Plättchen 17c, entsteht wieder elliptisch polarisiertes Licht, so dass auch dieses Licht mit einem Bruchteil der Intensität als linear polarisiertes Licht am Reflexionselement 31b reflektiert wird. Durch den zweiten Durchgang auf dem Rückweg zu den Kontrollempfängern 14, 14' wird das Lambda/4-Plättchen 17c durchstrahlt und es entsteht elliptisch polarisiertes Licht, das genauso von beiden Kontrollempfängern 14, 14' nachgewiesen werden kann.

Die Figur 15 zeigt ein Ausführungsbeispiel eines kombinierten Lambda/4-Plättchens 17c.

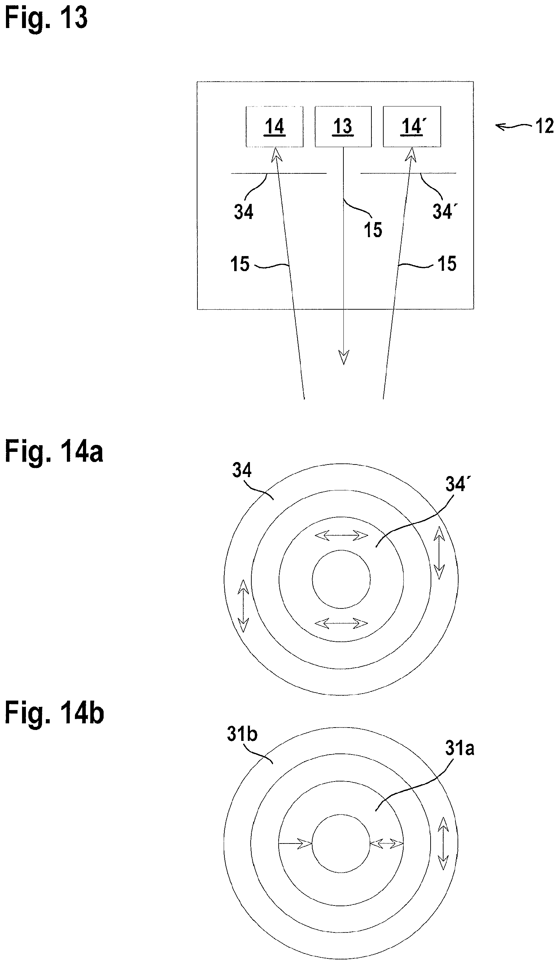

Die Figuren 13 und 14 a, b zeigen ein weiteres Ausführungsbeispiel eines Kontrollsensors 12.

Dieser Kontrollsensor 12 weist einen Kontrollsender 13 und zwei Kontrollempfänger 14, 14' auf, die eine triaxiale Anordnung bilden, die axial zur Drehachse D der Ablenkeinheit 9 angeordnet ist (Figur 13). Die Kontrollempfänger 14, 14' sind durch Polarisationsmittel in Form von Polarisationsfiltern 34, 34' senkrecht zueinander polarisiert, während der Kontrollsender 13 unpolarisierte Kontrolllichtstrahlen 15 emittiert. Die Funktionsweise dieser Anordnung ist analog zur Ausführungsform gemäß Figur 10.

Vorteilhaft weisen die Kontrollempfänger 14, 14' ringförmig angeordnete Empfangselemente auf, denen ringförmige Polarisationsfilter 34, 34' zugeordnet sind (Figur 14a). Dementsprechend sind ringförmige Reflexionselemente 31a, b vorgesehen (Figur 14b). Die Polarisationsrichtung des Reflexionselements 31a ist parallel zur Polarisationsrichtung der Polarisationsfilter 34`. Entsprechendes gilt für das Reflexionselement 31b und die Polarisationsfilter 34.

### Bezugszeichenliste

- (1): optischer Sensor
- (2): Gehäuse
- (2a): Boden
- (3): Distanzsensor
- (4): Sendelichtstrahlen
- (5): Sender
- (6): Empfangslichtstrahlen
- (7): Empfänger
- (8): Antriebseinheit
- (9): Ablenkeinheit
- (10): Umlenkspiegel
- (11): Austrittsfenster
- (12): Kontrollsensor
- (13): Kontrollsender
- (14, 14'): Kontrollempfänger
- (14a): Zusatz-Kontrollempfänger
- (15): Kontrolllichtstrahlen
- (16): Reflektor
- (17): Referenzelement
- (17a): transmittierendes Element
- (17b): Prisma
- (17c): kombiniertes Lambda/4-Plättchen
- (22): Signalpfad
- (23): Fehlererkennungsmodul
- (24): Ausgangsgröße
- (25): Signalpfad
- (26): Korrekturmodul
- (27): Signalpfad
- (28): Signalpfad
- (29): Verschmutzungskontrolle
- (30): Entscheidungssignal
- (31a): Reflexionselement
- (31b): Reflexionselement
- (32a): Polarisationsfolie
- (32b): Polarisationsfolie
- (33, 33'): Strahlteilerspiegel
- (34, 34'): Polarisationsfilter

- (D): Drehachse

## Patentansprüche

1. Optischer Sensor (1) zur Erfassung von Objekten in einem Überwachungsbereich, mit einem Gehäuse (2) in welchem Sensorkomponenten integriert sind, wobei als Sensorkomponenten ein Sendelichtstrahlen (4) emittierender Sender (5) und ein Empfangslichtstrahlen (6) empfangender Empfänger (7) vorhanden sind, wobei das Gehäuse (2) ein Austrittsfenster (11) aufweist, durch welches die Sendelichtstrahlen (4) und die von Empfangslichtstrahlen (6) geführt sind, wobei die Sendelichtstrahlen (4) mittels Ablenkmitteln periodisch innerhalb des Überwachungsbereichs geführt sind und wobei zur Kontrolle von Beeinträchtigungen des Austrittsfensters (11) eine Anordnung von Kontrollsensoren (12) mit jeweils einem Kontrolllichtstrahlen (15) emittierenden Kontrollsender (13) und Kontrolllichtstrahlen (15) empfangenden Kontrollempfänger (14, 14') vorhanden ist, **dadurch gekennzeichnet, dass** in einer zeitlichen Abfolge wenigstens ein Referenzelement (17) in den oder die Strahlengänge der Kontrolllichtstrahlen (15) zur Durchführung von Referenzmessungen eingebracht wird, anhand derer eine Überwachung der Kontrollsensoren (12) durchgeführt wird, und/oder dass dem Kontrollsensor (12) zwei Reflexionselemente (31a, b) zugeordnet sind, wobei über ein erstes Reflexionselement (31a) das Austrittsfenster (11) durchsetzende Kontrolllichtstrahlen (15) zum Kontrollempfänger (14, 14') geführt sind und über ein zweites Reflexionselement (31b) am Austrittsfenster (11) reflektierte Kontrolllichtstrahlen (15) zum Kontrollempfänger (14, 14') geführt sind, und wobei polarisierte Kontrolllichtstrahlen (15) im Kontrollempfänger (14, 14') ausgewertet werden.

2. Optischer Sensor (1) nach Anspruch 1, **dadurch gekennzeichnet, dass** in dessen Gehäuse (2) als Ablenkmittel eine eine Drehbewegung ausführende Ablenkeinheit (9) vorgesehen ist, an welcher die Sendelichtstrahlen (4) und Empfangslichtstrahlen (6) abgelenkt werden.

3. Optischer Sensor (1) nach Anspruch 2, **dadurch gekennzeichnet, dass** die Ablenkeinheit (9) einen motorisch getriebenen, um eine Drehachse (D) drehbaren Umlenkspiegel (10) aufweist, an welchem die Sendelichtstrahlen (4) und Empfangslichtstrahlen (6) abgelenkt werden.

4. Optischer Sensor (1) nach einem der Ansprüche 1 bis 3, **dadurch gekennzeichnet, dass** der Sender (5) und der Empfänger (7) einen Distanzsensor (3) ausbilden.

5. Optischer Sensor (1) nach einem der Ansprüche 1 bis 4, **dadurch gekennzeichnet, dass** dieser eine Auswerteeinheit aufweist, in welcher Empfangssignale des Empfängers (7) ausgewertet werden.

6. Optischer Sensor (1) nach einem der Ansprüche 1 bis 6, **dadurch gekennzeichnet, dass** dieser ein Sicherheitssensor ist.

7. Optischer Sensor (1) nach einem der Ansprüche 1 bis 6, **dadurch gekennzeichnet, dass** das Referenzelement (17) relativ zu dem oder den Kontrollsensoren (12) eine periodische Relativbewegung ausführt.

8. Optischer Sensor (1) nach einem der Ansprüche 3 bis 7, **dadurch gekennzeichnet, dass** das Referenzelement (17) an der Ablenkeinheit (9) befestigt ist.

9. Optischer Sensor (1) nach einem der Ansprüche 4 und 8, **dadurch gekennzeichnet, dass** das Referenzelement (17) fest mit dem Umlenkspiegel (10) verbunden ist.

10. Optischer Sensor (1) nach einem der Ansprüche 1 bis 9, **dadurch gekennzeichnet, dass** die Kontrolllichtstrahlen (15) am Referenzelement (17) reflektiert werden.

11. Optischer Sensor (1) nach Anspruch 10, **dadurch gekennzeichnet, dass** von einem Kontrollsender (13) emittierte Kontrolllichtstrahlen (15) am Referenzelement (17) reflektiert und zu dem zugeordneten Kontrollempfänger (14, 14') geführt sind.

12. Optischer Sensor (1) nach Anspruch 1 bis 9, **dadurch gekennzeichnet, dass** das Referenzelement (17) transmissive Eigenschaften aufweist.

13. Optischer Sensor (1) nach Anspruch 12, **dadurch gekennzeichnet, dass** ein definierter Teil der Kontrolllichtstrahlen (15) eines Kontrollsenders (13) das Referenzelement (17) durchsetzt und zum zugeordneten Kontrollempfänger (14, 14') geführt ist.

14. Optischer Sensor (1) nach einem der Ansprüche 1 bis 9, **dadurch gekennzeichnet, dass** das Referenzelement (17) sowohl reflektive als auch transmissive Eigenschaften aufweist.

15. Optischer Sensor (1) nach einem der Ansprüche 1 bis 14, **dadurch gekennzeichnet, dass** anhand von Referenzmessungen in einer Rechnereinheit Fehler der Kontrollsensoren (12) erkannt werden.

16. Optischer Sensor (1) nach einem der Ansprüche 1 bis 15, **dadurch gekennzeichnet, dass** anhand von Referenzmessungen in einer Rechnereinheit Korrekturwerte für die Kontrollsensoren (12) ermittelt werden.

17. Optischer Sensor (1) nach Anspruch 16, **dadurch gekennzeichnet, dass** anhand der Korrekturwerte Sendeleistungen des oder der Kontrollsender (13) und/oder Empfindlichkeiten des oder der Kontrollempfänger (14, 14') korrigiert werden.

18. Optischer Sensor (1) nach einem der Ansprüche 1 bis 15, **dadurch gekennzeichnet, dass** anhand von Referenzmessungen Messergebnisse des oder der Kontrollsensoren (12) korrigiert werden.

19. Optischer Sensor (1) nach einem der Ansprüche 1 bis 18, **dadurch gekennzeichnet, dass** der Kontrollsender (13) linear polarisierte Kontrolllichtstrahlen (15) emittiert, und/oder dass dem Kontrollempfänger (14, 14') linearpolarisierende Polarisationsmittel vorgeordnet sind.

20. Optischer Sensor (1) nach einem der Ansprüche 1 bis 19, **dadurch gekennzeichnet, dass** jeder Kontrollsensor (12) ein koaxialer Reflexionstaster ist.

21. Optischer Sensor (1) nach Anspruch 20, **dadurch gekennzeichnet, dass** die Reflexionselemente (31a, b) jeweils in Form eines Spiegels mit einem vorgeordneten Polarisationselement oder als Retroreflektor ausgebildet sind.

22. Optischer Sensor (1) nach einem der Ansprüche 20 oder 21, **dadurch gekennzeichnet, dass** der einen Kontrollsensor (12) bildende Reflexionstaster nur einen Kontrollempfänger (14) aufweist, welcher einem Strahlteilerspiegel (33) zugeordnet ist.

23. Optischer Sensor (1) nach einem der Ansprüche 20 oder 21, **dadurch gekennzeichnet, dass** der einen Kontrollsensor (12) bildende Reflexionstaster einen Kontrollsender (13) und zwei Kontrollempfänger (14, 14') aufweist, wobei zwei Strahlteilerspiegel (33, 33') vorhanden sind, mittels derer ein koaxialer Strahlengang der Kontrolllichtstrahlen (15) erzeugt wird.

24. Optischer Sensor (1) nach einem der Ansprüche 1 bis 19, **dadurch gekennzeichnet, dass** jeder Kontrollsensor (12) eine triaxiale Anordnung mit einem Kontrollsender (13) und zwei Kontrollempfängern (14, 14') aufweist.

25. Optischer Sensor (1) nach einem der Ansprüche 23 oder 24, **dadurch gekennzeichnet, dass** den Kontrollempfängern (14, 14') Polarisationsmittel zugeordnet sind, deren Polarisationsrichtungen senkrecht zueinander orientiert sind, wobei der Kontrollsender (13) unpolarisierte Kontrolllichtstrahlen (15) emittiert.

26. Optischer Sensor (1) nach Anspruch 24, **dadurch gekennzeichnet, dass** jeder Kontrollempfänger (14, 14') eine ringförmige Anordnung von Empfangselementen aufweist.

27. Verfahren zur Erfassung von Objekten in einem Überwachungsbereich mittels eines optischen Sensors (1), mit einem Gehäuse (2) in welchem Sensorkomponenten integriert sind, wobei als Sensorkomponente ein Sendelichtstrahlen (4) emittierender Sender (5) und ein Empfangslichtstrahlen (6) empfangender Empfänger (7) vorhanden sind, wobei das Gehäuse (2) ein Austrittsfenster (11) aufweist, durch welches die Sendelichtstrahlen (4) und die von Empfangslichtstrahlen (6) geführt sind, wobei die Sendelichtstrahlen (4) mittels Ablenkmitteln periodisch innerhalb des Überwachungsbereichs geführt sind und wobei zur Kontrolle von Beeinträchtigungen des Austrittsfensters (11) eine Anordnung von Kontrollsensoren (12) mit jeweils einem Kontrolllichtstrahlen (15) emittierenden Kontrollsender (13) und Kontrolllichtstrahlen (15) empfangenden Kontrollempfänger (14, 14') vorhanden ist, **dadurch gekennzeichnet, dass** in einer zeitlichen Abfolge wenigstens ein Referenzelement (17) in den oder die Strahlengänge der Kontrolllichtstrahlen (15) zur Durchführung von Referenzmessungen eingebracht wird, anhand derer eine Überwachung der Kontrollsensoren (12) durchgeführt wird, und/oder dass dem Kontrollsensor (12) zwei Reflexionselemente (31a, b) zugeordnet sind, wobei über ein erstes Reflexionselement (31a) das Austrittsfenster (11) durchsetzende Kontrolllichtstrahlen (15) zum Kontrollempfänger (14, 14') geführt sind und über ein zweites Reflexionselement (31b) am Austrittsfenster (11) reflektierte Kontrolllichtstrahlen (15) zum Kontrollempfänger (14, 14') geführt sind, und wobei polarisierte Kontrolllichtstrahlen (15) im Kontrollempfänger (14, 14') ausgewertet werden.
